# EUROPEAN PATENT APPLICATION

(11) **EP 3 136 741 A1**
(43) Date of publication of application: **01.03.2017**
(21) Application number: 16176973.2
(22) Date of filing: 29.06.2016
(51) Int. Cl.: H04N 21/436, H04N 21/4363, H04N 21/4402, H04N 21/442

(54) **INPUT/OUTPUT DEVICE, RELAY DEVICE FOR TRANSMITTING CONTENTS TO AN EXTERNAL APPARATUS AND METHODS THEREOF**

(30) Priority: 28.08.2015 KR 20150122088
(71) Applicant: Samsung Electronics Co., Ltd., Gyeonggi-do 16677 (KR)
(72) Inventor: LEE, Jin, Gyeonggi-do (KR); KANG, Hyun-koo, Gyeonggi-do (KR); YOON, Eung-sik, Gyeonggi-do (KR)
(74) Representative: Appleyard Lees IP LLP

(57) **Abstract**

An input/output (I/O) device includes at least one I/O port connected to an external source; a wireless interface configured to communicate with an external apparatus; and a processor configured to, in response to receiving content from the external source through the at least one I/O port, transmit the content to the external apparatus through the wireless interface, wherein the processor is further configured to encode a moving image and transmit the encoded moving image to the external apparatus in response to determining that the content is the moving image, and transmit a still image to the external apparatus without encoding the still image in response to determining that the content is the still image.

## Description

### CROSS-REFERENCE TO RELATED APPLICATION

This application claims priority from Korean Patent Application No. 10-2015-0122088, filed on August 28, 2015, in the Korean Intellectual Property Office, the disclosure of which is incorporated herein by reference in its entirety.

### BACKGROUND

### 1. Field

Apparatuses and methods consistent with exemplary embodiments relate to an input/output (I/O) device, a relay device for transmitting contents received through the I/O device to an external apparatus, and methods thereof.

### 2. Description of the Related Art

The development of electronic technologies has introduced various types of display apparatuses. A television (TV) is a representative example of the various types of display apparatuses. Recently, a TV includes various types of input/output (I/O) ports to receive and display broadcast contents transmitted from a broadcasting station and/or contents received from various types of external sources such as a digital video disk (DVD) player, a Blue-ray disc player, etc.

A user may view contents from source devices on a TV by connecting the source devices to the TV by wire. The number of connection lines used in the TV increases with an increase in the number of source devices connected to the TV. In general, I/O ports of the TV are arranged on a back surface of the TV for an aesthetic reason.

However, in a case where the TV is attached on a wall of a room (e.g., a living room), the TV needs to be detached from the wall to connect the I/O ports to the connection lines, which causes inconvenience to a user. Moreover, if the TV is large and heavy, detaching the TV from the wall may be a difficult task to perform. Thus, in a case of a wall-mounted type TV, it is difficult to connect the connection lines to the I/O ports.

If the I/O ports are arranged on a side or a front of a TV to prevent the above-described problem, this may decrease the aesthetic appeal. Also, recent trends are that a bezel of the TV becomes smaller, and a thickness of a panel of the TV becomes slimmer. If the recent trends are considered, sizes and the number of I/O ports that may be arranged on the front or the side of the TV may be limited.

Therefore, an increase in the number of connection lines may not enhance the aesthetic quality of the TV, and it is difficult for a user to manage the connection lines of the TV. In particular, in case of a wall-mounted type TV, connection lines are exposed, which may reduce the aesthetic appeal and cause an inconvenience of the user in watching the TV.

The above problem may occur not only in a TV but also in various types of display apparatuses connectable to an external source.

### SUMMARY

One or more exemplary embodiments overcome the above disadvantages and other disadvantages not described above. Also, an exemplary embodiment is not required to overcome the disadvantages described above, and an exemplary embodiment may not overcome any of the problems described above.

One or more exemplary embodiments provide an input/output (I/O) device for effectively providing contents played in an external source to a display apparatus, and a method thereof.

One or more exemplary embodiments also provide a relay device for effectively transmitting contents, which are played in an external source and then provided through an I/O device, to a display apparatus, and a method thereof.

According to an aspect of an exemplary embodiment, provided is an input/output (I/O) device including: at least one I/O port connected to an external source; a wireless interface configured to communicate with an external apparatus; and a processor configured to, in response to receiving content from the external source through the at least one I/O port, transmit the content to the external apparatus through the wireless interface, wherein the processor is further configured to encode a moving image and transmit the encoded moving image to the external apparatus in response to determining that the content is the moving image, and transmit a still image to the external apparatus without encoding the still image in response to determining that the content is the still image.

The I/O device may further include an encoder configured to encode the moving image, wherein in response to determining that the content is the moving image, the processor is further configured to control the encoder to encode the moving image at a compression rate lower than a compression rate at which the moving image is compressed and provided to the external source.

The I/O device may further include an encoder configured to encode the moving image, wherein in response to determining that the content is the moving image, the processor is further configured to control the encoder to encode the moving image at a compression rate based on at least one of a data size of the moving image and a transmission speed of the wireless interface.

In response to determining that the content is the still image, the processor may be further configured to transmit the still image to the external apparatus once or a number of times during a predetermined time interval.

The I/O device may further include a security processor configured to perform security processing with respect to the content that is to be transmitted to the external apparatus; a universal serial bus (USB) port connectable to a USB device; and a high-definition multimedia interface (HDMI) switch configured to select an HDMI port from the at least one I/O port.

The I/O device may further include a storage configured to store the content, wherein the processor is further configured to compare at least two frames of the content stored in the storage to determine whether the content is the still image or the moving image.

The I/O device may further include a storage configured to store the content, wherein the processor is further configured to compare cyclic redundancy check (CRC) values of at least two frames of the stored content, and determine that the content is the still image or the moving image based on a result of comparison between the CRC values.

According to an aspect of an exemplary embodiment, provided is a relay device including: a wireless interface configured to communicate with an I/O device; a wire interface connected to a display apparatus; a processor configured to, in response to receiving content of an external source from the I/O device through the wireless interface, transmit the content to the display apparatus through the wire interface, wherein the processor is further configured to transmit a still image to the display apparatus in response to determining that the content is the still image that is non-compressed, and decode a moving image and transmit the decoded moving image to the display apparatus in response to determining that the content is the moving image that is compressed.

According to an aspect of an exemplary embodiment, provided is a method of providing content in an I/O device, the method including: receiving content from an external source connected to an I/O port of the I/O device; in response to determining that the content is a still image, transmitting the still image, without encoding the still image, to an external apparatus through a wireless interface; and in response to determining that the content is a moving image, encoding the moving image and transmitting the encoded moving image to the external apparatus through the wireless interface.

The encoding the moving image may include encoding the moving image at a compression rate lower than a compression rate at which the moving image is compressed and provided to the external source.

The encoding the moving image may include encoding the moving image at a compression rate based on according to a data size of the moving image and a transmission speed of the wireless interface.

The transmitting the still image may include transmitting the still images to the external apparatus once or a number of times during a predetermined time interval.

The method may further include storing the content; and comparing at least two frames of the stored content in unit of at least one pixel to determine whether the content is the still image or the moving image.

The method may further include storing the content; and comparing CRC values of at least two frames of the stored content to determine whether the content is the still image or the moving image based on a result of the comparing.

According to an aspect of an exemplary embodiment, provided is a relaying method of a relay device, including: performing a wireless communication with an I/O device to which an external source is connected; wirelessly receiving content of the external source from the I/O device; in response to determining that the content is a still image that is non-compressed, transmitting the still image, without encoding the still image, to a display apparatus connected to the relay device by wire; and in response to determining that the content is a moving image that is compressed, decoding the moving image and transmitting the decoded moving image to the display apparatus.

According to an aspect of an exemplary embodiment, provided is a display apparatus including: a display; a wireless interface configured to communicate with an I/O device; and a processor configured to receive content of an external source from the I/O device through the wireless interface and output the content on the display, wherein the processor is further configured to output a still image to the display in a state in which the still image is received in response to determining that the content is the still image, and decode a moving image and transmit the decoded moving image to the display in response to determining that the content is the moving image.

A connection line connected to the external source may not be provided to the display apparatus.

The display apparatus may further include a relay device, which is connected to the display apparatus by wire and configured to receive the content from the I/O device through a wireless communication and relay the received content to the display apparatus.

The wireless interface may include a plurality of wireless interfaces according to respective wireless communication methods and the processor may be further configured to determine a wireless interface that corresponds to a characteristic of the content.

The display apparatus may further include a decoder configured to selectively decode the content in response to determining that the content is the moving image.

Additional and/or other aspects will be set forth in part in the description which follows and, in part, will be obvious from the description, or may be learned by practice of the exemplary embodiments.

### BRIEF DESCRIPTION OF THE DRAWING FIGURES

The above and/or other aspects will be more apparent by describing certain example embodiments with reference to the accompanying drawings:
FIG. 1 is a schematic view illustrating an operation of an input/output (I/O) device according to an exemplary embodiment;
FIG. 2 is a block diagram of a configuration of an I/O device according to an exemplary embodiment;
FIG. 3 is a block diagram of a configuration of the I/O device 100, according to an exemplary embodiment;
FIG. 4 illustrates a method of determining a characteristic of contents in the I/O device 100, according to an exemplary embodiment;
FIG. 5 is a block diagram of a configuration of a relay device according to an exemplary embodiment;
FIG. 6 illustrates an integrated port according to an exemplary embodiment
FIG. 7 illustrates operations of an I/O device and a relay device, according to an exemplary embodiment;
FIG. 8 is a flowchart of a method of providing contents of an I/O device according to an exemplary embodiment;
FIG. 9 is a flowchart of a method of providing contents of a relay device according to an exemplary embodiment; and
FIG. 10 is a block diagram illustrating a configuration of a display apparatus according to an exemplary embodiment.

### DETAILED DESCRIPTION

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

General terms are selected as the terms used in the specification and claims in consideration of functions of various exemplary embodiments. However, these terms may vary according to intentions of technicians skilled in the art or legal or technical interpretations and emergencies of new technologies. Also, some terms are arbitrarily selected by an applicant. These terms may be interpreted as a meaning defined in the specification. If there is no detailed term definition, the terms may be interpreted based on overall contents of the specification and normal technical common senses of the art.

Also, the same reference numerals or signs respectively described in the drawings attached to the specification indicate parts or elements that perform the actually same functions. For convenience of description and understanding, the same reference numerals or signs will be used and described in different exemplary embodiments. In other words, although elements having the same reference numerals are all illustrated in a plurality of drawings, the plurality of drawings do not mean one exemplary embodiment. Also, the terms "first", "second", etc. may be used to describe diverse components, but the components are not limited by the terms. The terms are only used to distinguish one component from the others. For example, used orders, arrangement orders, or the like of elements that are combined with these ordinal numbers may not be limited by the numbers. If necessary, the ordinal numbers may be respectively replaced and used.

The singular expression also includes the plural meaning as long as it does not differently mean in the context. In the disclosure, the terms "include" and "comprise" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Also, when any part is connected to another part, this includes a direct connection and an indirect connection through another medium. Unless otherwise defined, when any part includes any element, it may mean that any part further include other elements without excluding other elements.

Hereinafter, the present invention will be described in detail with reference to the accompanying drawings.

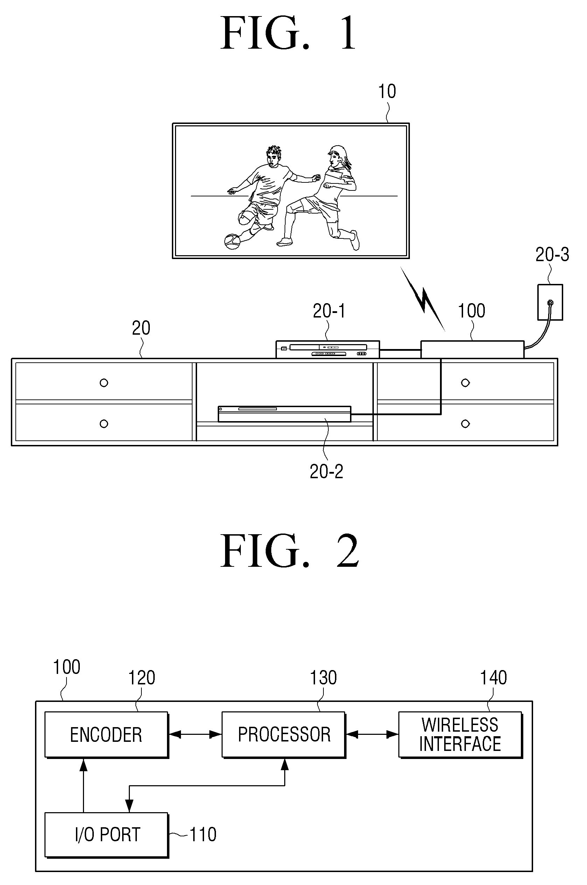

FIG. 1 illustrates an operation of an input/output (I/O) device 100 according to an exemplary embodiment. Referring to FIG. 1, the I/O device 100 may perform a wireless communication with an external apparatus 10. The I/O device 100 may be connected to various types of external sources 20-1, 20-2, and 20-3 by wire.

The external apparatus 10 may include a display apparatus and/or a relay device that is connected to the display apparatus to relay contents from the I/OI device 100. For example, the external apparatus 10 may include a display apparatus attached onto or embedded in a wall as shown in the exemplary embodiment of FIG. 1. Also, the external apparatus 10 and may be wirelessly connected to a relay device (not shown). The relay device may be realized as an apparatus such as a dongle. An exemplary embodiment where the external apparatus 10 is a display apparatus that is connected to the I/O device 100 without a relay device is described with reference to FIG. 1. That is, the external apparatus 10 may be a display apparatus that performs a wireless communication to the I/O device 100 through wireless communication. An exemplary embodiment where the external apparatus 10 includes the relay device connected to the display apparatus will be described later.

As shown in FIG. 1, the I/O device 100 is positioned on a piece of furniture (e.g., a decoration cabinet) 20 to have a preset distance from the external apparatus 10. Also, three external sources 20-1, 20-2, and 20-3 are illustrated in FIG. 1, but the number and kinds of the external sources 20-1, 20-2, and 20-3 may be various. For example, the external sources 20-1, 20-2, and 20-3 may be any one of a digital versatile disk (DVD) player, a Blue-ray disc, a personal computer (PC), a universal serial bus (USB) device, a game player, a home theater, an audio player, a set-top box, an antenna cable, or the like and may be connected to the I/O device 100.

The I/O device 100 transmits contents of an external source to the external apparatus 10 according to a user selection. For example, f a high definition multimedia interface (HDMI) port to which the DVD player is connected is selected, the I/O device 100 receives contents restored in the DVD player through the selected HDMI port.

If the received contents are moving image contents, the I/O device 100 may encode the moving image contents and transmit the encoded moving image contents to the external apparatus 10. In this case, a method of encoding contents and a compression rate of the contents may be appropriately set according to a communication speed between the I/O device 100 and the external apparatus 10, a size of the contents, etc. The compression rate may be set to stably provide the contents to the external apparatus 10 such that the user may not recognize an image quality deterioration. In detail, the I/O device 100 may encode moving image contents at a lower compression rate than an original compression rate (e.g., a compression rate at which the moving image contents are compressed and provided to the external source). The compression rate may be variably set according to a data size of the moving image contents.

If the encoded moving image contents are received from the I/O device 100, the external apparatus 10 decodes the encoded moving image contents and plays the moving image contents. Therefore, the external apparatus 10 may display contents restored in an external source.

If the received contents are still images, the I/O device 100 may transmit the still images to the external apparatus 10 without encoding the still images. The I/O device 100 may transmit the still image contents to the external apparatus 10 a preset minimum number of times. For example, the I/O device 100 may transmit the still image contents about one time or two times. According to exemplary embodiments, the I/O device 100 may transmit the still image contents to the external apparatus 10 one time or two times, repeatedly, for every preset time interval (e.g., every one second, every two seconds, or the like).

If still images are provided from the I/O device 100, the external apparatus 100 displays the still images in a state in which the still images are received. The still images may be image frames that are captured when moving images are played and/or paused or the still images may be additionally generated photo images, graphic images, or the like. Alternatively, the still images may include document images or document data. Since still image contents are not changed every frame, the external apparatus 10 may receive contents about one time or two times. In this case, the external apparatus 10 may store the contents to repeatedly display the contents. Therefore, although data restored in an external source is not continuously provided to the external apparatus 10, the same effect may be acquired.

When contents are compressed and then decompressed, an image quality of the contents may be deteriorated than an image quality of original contents. Therefore, a compression rate may be controlled not to be overly high such that the user may not feel a deterioration in an image quality. However, if the compression rate is not sufficiently high, a wireless transmission may be impossible or a transmission stability may be lowered.

Also, an image compression may be performed within one screen or performed by using a correlation between several consecutive screens. If a compression is performed only within one screen, compression efficiency may be low. However, hardware cost is relatively low, and a processing delay is lowered. On the other hand, if the compression (moving picture experts group (MPEG), or the like) is performed by using a correlation between consecutive screens, a compression rate may be higher. However, hardware cost greatly increases, and additional compression/decompression delays may occur. A user may not easily recognize an image quality deterioration in moving image contents but relatively easily recognize an image quality deterioration in still images.

In an exemplary embodiment, in consideration of the above, when contents are still images, the I/O device 100 provides the still images to the external apparatus 10 without compressing the still images to prevent an image quality deterioration. If the contents are moving images, the I/O device 100 encodes the moving images on a level at which the encoded moving images are wirelessly transmittable while the user may not feel an image quality deterioration, and the I/O device 100 provides the encoded moving images to the external apparatus 10.

As a result, contents restored in an external source may be efficiently transmitted to the external apparatus 10 through a wireless interface to be displayed on the external apparatus 10.

FIG. 2 is a block diagram of a configuration of an I/O device 100 according to an exemplary embodiment. Referring to FIG. 2, the I/O device 100 includes an I/O port 110, an encoder 120, a processor 130, and a wireless interface 140.

The I/O port 110 refers to a port that may be connected to various types of external sources. One I/O port 110 is illustrated in FIG. 2, but the I/O port 110 may include two or more ports that may be connected to various types of sources.

The encoder 120 is an element that performs encoding under control of the processor 130. The encoder 120 may perform encoding according to an arbitrary encoding method. For example, the encoder 120 may perform encoding according to any encoding methods such as high efficiency video coding (HEVC), H.264, MPEG, etc.

The wireless interface 140 is an element that performs wireless communications with various types of external apparatuses. In detail, the wireless interface 140 may perform wireless communications according to a method such as WiFi, WiFi Direct, wireless gigabit alliance (WiGig), Bluetooth, or the like. Additionally, the wireless interface 140 may perform wireless communications by using a nonstandard technique.

A type of the wireless interface 140 may be determined according to a characteristic of contents to be input through the I/O device 100. For example, a system that may play an ultra-high definition (UHD) contents may use the wireless interface 140 through which a 60 GHz-based Gpbs wireless transmission is possible.

If contents are received from an external source connected to the I/O port 110, the processor 130 transmits the contents to the external apparatus 10 through the wireless interface 140. For example, if a digital video disk (DVD) is played in a DVD player when the DVD player is connected to an HDMI 1 port, contents restored in the DVD are received by the I/O device 100.

If the received contents are still image contents, the processor 130 transmits the still image contents without encoding the still image contents to the external apparatus 10. If the contents are moving image contents, the moving image contents are encoded by using the encoder 120 and then transmitted to the external apparatus 10.

If the contents are moving image contents, the processor 130 may control the encoder 120 to encode the moving image contents at a lower compression rate than an original compression rate.

The compression rate of the encoder 120 may vary according to a data size of the moving image contents and/or a transmission speed of the wireless interface 140.

For example, UHD 4K high-definition contents have a large data size and thus a transmission speed of about 15 Gbps may be employed to transmit the UHD 4K high-definition contents. If a transmission speed of the wireless interface 140 is between about 1 Gbps and about 1.5 Gbps, the encoder 120 may perform encoding at a compression rate between about 10:1 and about 20:1. Since an original compression rate of UHD 4K high-definition contents is a level between about 200:1 and about 300:1, encoding may be performed at a relatively lower compression rate than the original compression rate, and thus a user may not feel an image quality deterioration.

According to another example, full high-definition (FHD) contents may be transmitted by employing a transmission speed between about 2.5 Gbps and about 3 Gbps. Therefore, the encoder 120 may encode the FHD contents at a compression rate between about 2:1 and about 4:1.

The processor 130 may transmit still image contents to the external apparatus 10 without encoding the still image contents. However, the processor 130 may transmit the still image contents by a preset number of times, instead of transmitting the still image contents by a number of frames per unit time. For example, the processor 130 transmits the still image contents about one time or about two times per second. The external apparatus 10 stores the still image contents, which are transmitted one time or two times, and then repeatedly output the still image contents by a preset number of times per unit time (e.g., sixty times per second). Therefore, a wireless transmission may be efficiently performed without compressing an image, and thus an image quality deterioration may be prevented.

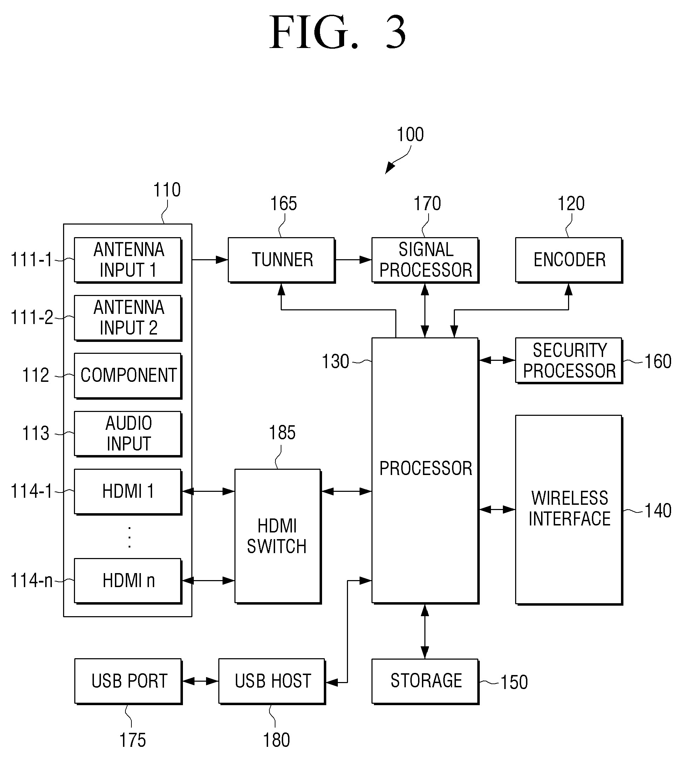

FIG. 3 is a block diagram of a detailed configuration of the I/O device 100, according to an exemplary embodiment. Referring to FIG. 3, the I/O device 100 may further include elements, such as a security processor 160, a storage 150, a tuner 165, a signal processor 170, a USB port 175, a USB host 180, an HDMI switch 185, etc., in addition to the I/O port 110, the encoder 120, the processor 130, and the wireless interface 140.

The I/O port 110, the encoder 120, the processor 130, and the wireless interface 150 have the same or similar operations as those described above with reference to FIG. 2 and thus descriptions thereof are omitted.

The I/O port 110 may include first and second antenna input ports 111-1 and 111-2, a component port 112, an audio input port 113, first through n-th HDMI ports 114-1 through 114-n, etc. The I/O port 110 illustrated in FIG. 3 is only an example, and a type, an arrangement position, the number, etc. of each port included in the I/O port 110 may be variously changed. For example, the I/O port 110 may further include a PC input port, an EX-LINK port, a local area network (LAN) port, etc.

The tuner 165 is an element that selects a broadcast channel received through the first or second antenna input port 111-1 or 111-2. The first antenna input port 111-1 may be used for digital broadcasting, and the second antenna input port 111-2 may be commonly used for analog broadcasting, cable broadcasting, and digital broadcasting.

If a digital broadcast is received through the first or second antenna input port 111-1 or 111-2, the processor 130 provides the digital broadcast in its form to the external apparatus 10. Since a digital broadcast is received in a broadcast stream format that is packetized according to a preset broadcast standard, the I/O device 100 may provide a broadcast stream to the external apparatus 10 without additionally processing, i.e., restoring, encoding, or the like, the broadcast stream.

Also, if an analog broadcast is received through the second antenna input port 111-2, the processor 130 controls the signal processor 170 to convert analog broadcast contents into digital data.

If an analog broadcast is received, the signal processor 170 samples the analog broadcast at an arbitrary frequency and then performs analog-to-digital conversion (ADC) to convert the sampled analog broadcast into digital data. The processor 130 transmits the digital data converted by the signal processor 170 to the external apparatus 10 through the wireless interface 140.

It is illustrated in FIG. 3 that one audio input port 113 is included in the I/O port 110, but a plurality of audio input ports, such as a digital audio input port and an analog audio input port, may be included. If digital audio data is input through the digital audio input port, the processor 130 may provide the digital audio data in its form to the external apparatus 10 through the wireless interface 140. If an analog audio signal is input, the processor 130 controls the signal processor 170 to convert the analog audio signal into a digital audio signal according to an integrated interchip sound (I²S) standard. The signal processor 170 provides the converted digital audio signal to the external apparatus 10 through the wireless interface 140.

For convenience of description, one signal processor 170 is illustrated and performs analog signal processing in FIG. 3 but is not limited thereto. For example, the signal processor 170 may include a plurality of signal processors such as a video processor, an audio processor, etc.

The I/O device 100 may further include the USB port 175 and the USB host 180.

The USB port 175 is an element to which various types of USB sources may be connected. For example, a USB memory stick, an external terminal apparatus, or the like may be connected to the USB port 175.

The USB host 180 is an element that operates along with an external source connected to the USB port 175. For example, if the USB memory stick is connected to the USB port 175, the USB host 180 reads a file stored in the USB memory stick and then provides the read file to the external apparatus 10 through the wireless interface 140. In this case, the USB host 180 may operate along with a USB device module (not shown) embedded in the external apparatus 10.

Alternatively, if a device, such as a camera capable of playing moving images or still images, is connected to the USB port 175, contents played in the camera are provided to the I/O device 100. In this case, the processor 130 provides still image contents in their forms to the external apparatus 10 through the wireless interface 140 as described above. The processor 130 appropriately encodes moving image contents by using the encoder 120 and then provides the encoded moving image contents to the external apparatus 10 through the wireless interface 140. However, if the moving image contents do not have a large size and may be transmittable by employing a transmission speed condition of the wireless interface 140, the processor 130 may not encode the moving image contents but may output the moving image contents in their forms through the wireless interface 140.

The HDMI switch 185 is an element that selects one from a plurality of HDMI ports 114-1 through 114-n. If a user selects one from HDMI ports by using a main body button of a remote controller or an external apparatus, a main body button of the I/O device 100, or the like, the processor 130 provides a selection signal thereof to the HDMI switch 185. The HDMI switch 185 selects an HDMI port corresponding to the selection signal to receive contents through the selected HDMI port. The processor 130 may perform an operation as described above according to whether contents received through the HDMI port are still images or moving images.

The processor 130 may select a port according to a selection command transmitted from the external apparatus 10 or a remote control signal or the like received through a remote control signal receiver (not shown) included in the I/O device 100.

The storage 150 is an element that stores various types of programs or data that may be used to operate the I/O device 100. The storage 150 may include at least one from various types of memories such as a random access memory (RAM), a read only memory (ROM), a hard disk drive (HDD), a flash memory, a buffer, etc. The storage 150 may store contents received through the I/O port 110.

The security processor 160 is an element that performs security processing, i.e., digital rights management (DRM) processing, with respect to contents that will be transmitted to the external apparatus 10 through the wireless interface 140. For example, a mechanism, such as high-bandwidth digital content protection (HDCP), a content scrambling system (CSS), a decode content scrambling system (DeCss), a windows media DRM, a protected media path (PMP), an advanced access content system (AACS), an open mobile alliance (OMA) DRM, a Marlin DRM, or the like, may be applied to the security processor 160.

The processor 130 may reinforce a security of contents provided to the external apparatus 10, by using the security processor 160.

As described above, the I/O device 100 performs different operations according to a characteristic of contents and then provides the contents to the external apparatus 10 through the wireless interface 140. For this, the I/O device 100 may first check the characteristic of the contents. The characteristic of the contents may be determined according to various methods.

For example, the processor 130 may store respective frames of contents input through the I/O port 110 in the storage 150. The processor 130 may compare the respective frames to determine whether the contents are still image contents or moving image contents.

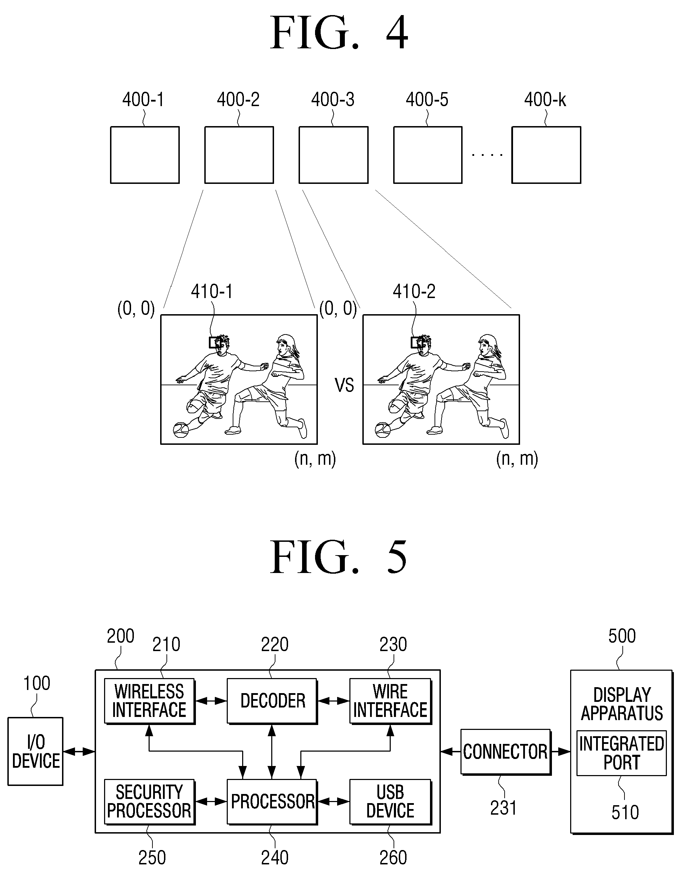

FIG. 4 illustrates a method of determining a characteristic of contents in the I/O device 100, according to an exemplary embodiment. Referring to FIG. 4, the processor 130 applies a window having an arbitrary size to at least two of frames 400-1 through 400-k stored in the storage 150 to calculate a representative pixel value of pixels of the window. The representative pixel value may be an average pixel value of all or some pixels of the window, a pixel value that is most frequently found in the pixels of the window, a maximum pixel value, or the like.

As shown in FIG. 4, windows 410-1 and 410-2 are respectively applied to two frames 400-2 and 400-3 that are temporally consecutive. The processor 130 sequentially moves the windows 410-1 and 410-2 from a point (e.g., pixel (0, 0) of a frame 400) to a last point (e.g., pixel (n, m)) to calculate a representative value. Horizontal and vertical pixel sizes of the windows 410-1 and 410-2 may be determined in consideration of a calculation speed or capacity of the processor 130. For example, a window having a size of 3x3 or 5x5 may be used.

The processor 130 may apply a window to a first frame (e.g., frame 400-2) to calculate a representative pixel value of the window and then apply a window to a second frame (e.g., frame 400-3) to calculate the representative pixel value of the window according to the same method. Alternatively, the processor 130 may simultaneously apply windows to a plurality of frames to process the plurality of frames in parallel. The processor 130 compares the representative pixel values, which are calculated from the windows 410-1 and 410-2 at corresponding positions of the two frames, to determine whether the representative pixel values match with each other. If the representative pixel values of the windows 410-1 and 410-2 do not match with each other according to the comparison result, it is indicated that the two frames are different form each other. Therefore, the processor 130 may determine that the two frames are moving image contents.

On the other hand, if representative pixel values of the windows completely match with each other, or if representative pixel values of the windows do not completely match with each other but a difference between the representative pixel values is lower than a threshold value, the processor 130 may determine that the two frames are still image contents.

As described with reference to FIG. 4, a preset number of pixels between the frames are compared with each other by using windows. However, in another exemplary embodiment, each of pixels of two frames may be compared one by one to determine whether the pixels of the two frames match each other.

As another example, the processor 130 may obtain a value that is determined according to a bitstream configuration of each frame, and then compare obtained values of frames to determine whether each frame is a still image content or a moving image content. For example, the processor 130 may calculate a cyclic redundancy check (CRC) value of a payload part of a bitstream corresponding to each frame. The CRC value of each frame of a still image is the same. Therefore, if the CRC values of two frames are the same, the processor 130 may determine that the two frames are still image contents. If the CRC values are different from each other, the processor 130 may determine that the two frames are moving image contents.

As another example, the processor 130 may determine types of contents by using header information of each of the contents and/or signaling data that is input along with or separately from the contents and determine whether two frames are still image contents or moving image contents based on the determined types of contents.

As described above, the processor 130 may differently process contents according to a result of determination of types of the contents. Therefore, contents input into the I/O device 100 may be stably provided to the external apparatus 10 without substantial image quality deteriorations. As described above, the external apparatus 10 may include a display apparatus and/or a relay device that is connected to the display apparatus to relay contents.

FIG. 5 is a block diagram of a configuration of a relay device 200 that performs a wireless communication with the I/O device 100, according to an exemplary embodiment.

Referring to FIG. 5, the relay device 200 includes a wireless interface 210, a decoder 220, a wire interface 230, a processor 240, a security processor 250, and a USB device module 260.

The wireless interface 210 is an element that performs a wireless communication with the I/O device 100. As described above, the wireless interface 210 may perform the wireless communication according to various methods such as WiFi, WiFi Direct, WiGig, Bluetooth, etc.

If the I/O device 100 and the relay device 200 are respectively activated, the I/O device 100 and the relay device 200 may perform pairing by using connection information, such as a pre-stored service set identifier (SSID) or the like, to automatically connect wireless communication sessions.

The wire interface 230 is an element that connects the relay device 200 to an external display apparatus 500 by wire. A connector 231 that is connected to the wire interface 230 may be connected to an integrated port 510 of the external display apparatus 500. A user may connect the connector 231 of the relay device 200 to the integrated port 510 of the external display apparatus 500. For example, the connector 231 may be realized as a stick type or a wire type.

The decoder 220 is an element that performs decoding. As described above, if contents are moving image contents, the I/O device 100 encodes and transmits the contents. If the moving image contents are received through the wireless interface 210, the processor 240 decodes the moving image contents by using the decoder 220 and then provides the decoded moving image contents to the external display apparatus 500 through the wire interface 230. A decoding method may be set to correspond to an encoding method of the I/O device 100. For example, the decoder 220 may be realized as an H.264 codec, an MPEG codec, an HEVC codec, or the like.

If still image contents are received through the wireless interface 210, the processor 240 transmits the still image contents in their forms to the external display apparatus 500 through the wire interface 230.

As a result, contents that are provided through the wire interface 230 may be displayed in their form on the external display apparatus 500.

Additionally, according to exemplary embodiments, the relay device 200 may further include the security processor 250 and/or the USB device module 260.

If the I/O device 100 performs security processing with respect to contents, the security processor 250 releases the security processing. For example, if contents are scrambled and then input into the wireless interface 210, the processor 240 controls the security processor 250 to unscramble the contents. Therefore, the external display apparatus 500 may display normal contents.

The USB device module 260 may operate along with a USB host of the I/O device 100 to detect various types of data from a source device connected to the USB port 175 and provide the detected data to the external display apparatus 500 through the wire interface 230.

A configuration of the relay device 200 has been described with reference to FIG. 5. However, as described above, the external display apparatus 500 may perform a wireless communication to directly receive contents from the I/O device 100. In this case, elements, such as the wireless interface 210, the decoder 220, the processor 240, etc., may be embedded in the external display apparatus 500. An illustration and a description of this exemplary embodiment are omitted.

As shown in FIG. 5, the integrated port 510 may be included in the external display apparatus 500 as described above to transmit data input from the I/O device 100 to the external display apparatus 500 through the relay device 200. The integrated port 510 may be realized as a type including a plurality of pins or pads corresponding to the plurality of I/O ports 110 and the USB port 175 of the I/O device 100.

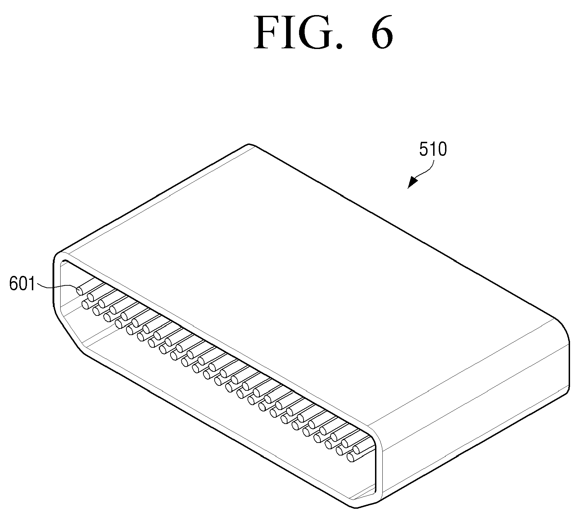

FIG. 6 illustrates the integrated port 510, according to an exemplary embodiment. Referring to FIG. 6, the integrated port 510 includes a plurality of pins 601. The pins 601 may include a power pint for supplying power, a GND pin, an HDMI input pin, a clock pin, a control signal pin, a USB pin, etc. but are not limited thereto. Therefore, types, the number, and an arrangement form of pins may be variously changed according to exemplary embodiments. The pins 601 of the integrated port 510 may be connected to each processor or circuit of the external display apparatus 500.

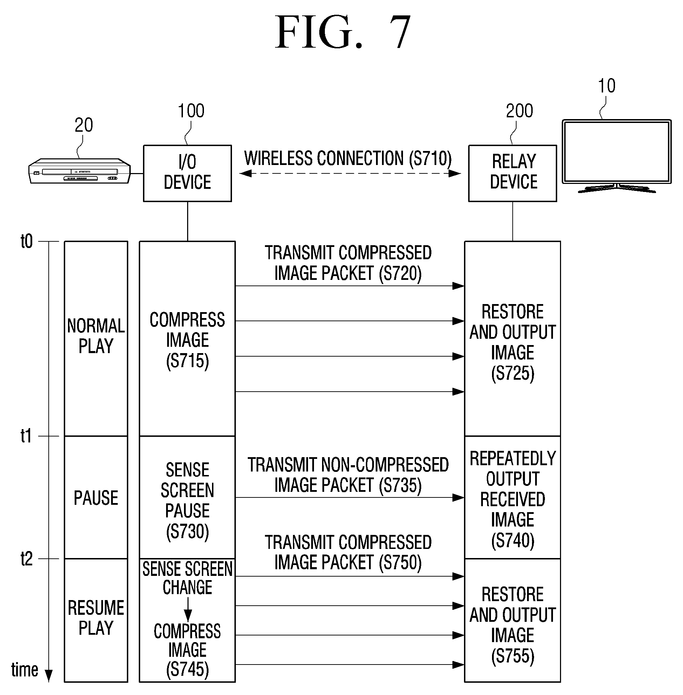

FIG. 7 illustrates operations of the I/O device 100 and the relay device 200, according to an exemplary embodiment. As shown in FIG. 7, in an external source 20, contents are restored from time t0 to time t1, paused from the time t1 to time t2, and restored from the time t2.

In operation S710, the I/O device 100 is wirelessly connected to the relay device 200. If contents are restored from the time t0 in this state, the I/O device 100 receives the restored contents and performs an image compression in operation S715. In operation S720, the I/O device 100 transmits a compressed image packet to the relay device 200 through a wireless interface. The compressed image packet may include information about a compression method and a compression rate. The I/O device 100 continuously transmits screen data according to a frame rate. For example, sixty pieces of screen data may be transmitted per second.

The relay device 200 decodes the compressed image packet, which is continuously transmitted, to restore an image and then outputs the restored image to a display apparatus 10 through a wire interface, in operation S725.

If a content restoring operation is paused at the time t1, the I/O device 100 receives a frame after a pause from the external source 20. In operation S730, the I/O device 100 compares sequentially input frames in unit of pixels or in unit of pixel groups to sense whether a screen is paused. Alternatively, the I/O device 100 may calculate a value for determining a data state, such as a CRC value, to sense whether the screen is paused or the I/O device 100 may sense whether the screen is paused according to various types of signaling data additionally provided from the external source 20.

If it is determined in operation S730 that the screen is paused, the I/O device 100 transmits a non-compressed image packet in operation S735. In this case, an indicator value for notifying a non-compressed state may be inserted into a header of the non-compressed image packet. The I/O device 100 may transmit the non-compressed image packet one time.

If the non-compressed image packet is received from the I/O device 100, the relay device 200 repeatedly outputs the non-compressed image packet in operation S740. Therefore, the display apparatus 10 repeatedly displays an image received during a time interval between the time t1 and the time t2.

If the restoring of the contents is resumed at the time t2, the I/O device 100 senses that the screen is changed and compresses an image in operation S745. Therefore, the I/O device 100 retransmits the compressed image packet in operation S750.

If the compressed image packet is received, the relay device 200 decodes the compressed image packet to restore an image and outputs the restored image to the display apparatus 10 in operation S755.

According to the above-described exemplary embodiment, although a direct connection line is omitted between the display apparatus 10 and the external source 20, contents may be stably provided from the external source 20, and an image quality deterioration may not be recognized by naked eyes of a user.

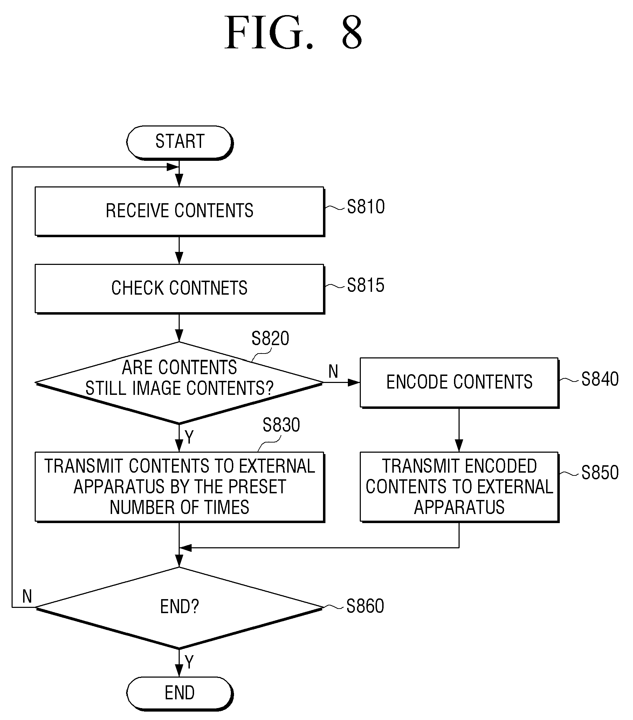

FIG. 8 is a flowchart of a method of providing contents of an I/O device according to an exemplary embodiment. Referring to FIG. 8, if contents are input from an external source connected to an I/O device by wire in operation S810, the I/O device determines a characteristic of the contents in operation S815. If the contents are still image contents according to a determination result in operation S820, the I/O device transmits the contents to an external apparatus by a preset number of times in operation S830. For example, the I/O device transmits the contents about one time or two times.

If the contents are moving image contents in operation S820, the I/O device encodes the moving image contents and then transmits the encoded moving image contents to the external apparatus in operations S840 and S850. As described above, an encoding method and a compression rate may be variably determined in consideration of a data size, a wireless transmission speed, etc. of contents.

Until it is determined that the inputting of the contents from the external source ends in operation S860, the I/O device continuously determines a characteristic of the input contents and then provides the contents in a compressed or non-compressed state to the external apparatus. As described above, the external apparatus may be a display apparatus and/or a relay device connected to the display apparatus.

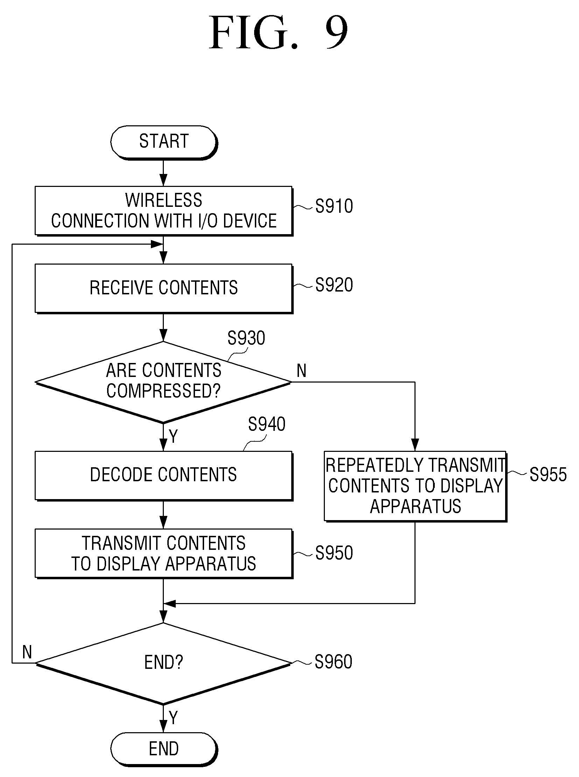

FIG. 9 is a flowchart of a method of providing contents in a relay device, according to an exemplary embodiment.

Referring to FIG. 9, the relay device 200 connects a communication session with the I/O device 100 in operation S910. If contents are received from the I/O device 100 in this state in operation S920, the relay device 200 determines whether the received contents are compressed in operation S930. The relay device 200 may determine whether the received contents are compressed, by using a header of a content packet.

If the received contents are compressed according to the determination result, the relay device 200 decodes the received contents and then transmits the decoded contents to a display apparatus in operations S940 and S950. If the received contents are non-compressed, the relay device 200 repeatedly transmits the received contents to the display apparatus in their forms in operation S955.

Until it is determined that the transmission of the contents from the I/O device 100 ends in operation S960, the relay device 200 continuously performs the above-described operations to provide the contents to the display apparatus.

As described above, contents that are restored in an external source connected to the I/O device 100 are mainly displayed through a display apparatus. The exemplary embodiments may be applied to external devices other than the display apparatus. For example, if a speaker of a home theater system is installed on a wall or a ceiling, the relay device 200 may be connected to the speaker. Therefore, audio data that is transmitted from the I/O device 100 may be wirelessly transmitted and output to the speaker. Alternatively, the speaker may be used in an electronic frame device, a kiosk PC, or the like attached onto a wall.

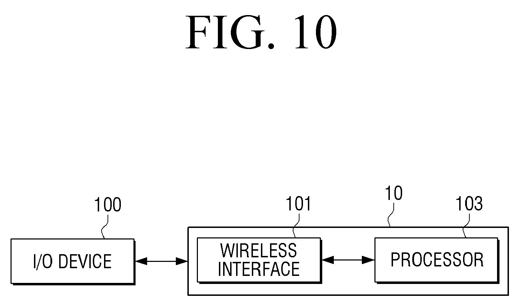

FIG. 10 is a block diagram illustrating a configuration of a display apparatus according to an exemplary embodiment.

Referring to FIG. 10, the display apparatus 10 according to an exemplary embodiment may include a wireless interface 101 and a processor 103. The display apparatus 10 may receive content of an external source from the I/O device 100 through the wireless interface 101. The processor may output a still image to the display in a state in which the still image is received by the display apparatus 10 in response to determining that the content is the still image, and decode a moving image and transmit the decoded moving image to the display in response to determining that the content is the moving image. The display apparatus 10 may further include the relay device 200 or may not include the relay device 200, as described above. When the display apparatus 10 does not include the relay device 200, the display apparatus 10 may include a decoder configured to selectively decode the content in response to determining that the content is the moving image that is compressed.

In an exemplary embodiment, the wireless interface 101 may include a plurality of wireless interfaces according to various wireless communication methods and the processor 103 may determine an appropriate wireless interface according to a characteristic of the content.

According to various exemplary embodiments, contents of an external source may be wirelessly provided to a display apparatus. Also, a deterioration in an image quality may be reduced or minimized, and a transmission stability of contents may be secured.

Also, a content providing method as described above may be executed by a program. A non-transitory computer readable medium that stores the program may be installed in an I/O device, a relay device, and/or a display apparatus, to perform content providing methods according to the above-described exemplary embodiments.

In detail, an I/O device may install therein a non-transitory computer readable medium that stores a program sequentially performing: in response to contents input from an external source connected to an I/O port of an I/O device, determining a characteristic of the contents; in response to determining that the contents are still images, transmitting the still images in their form to an external apparatus through a wireless interface; and in response to determining that the contents are moving images, encoding the moving images and transmitting the encoded moving images to the external apparatus through the wireless interface.

Alternatively, a relay device may install a non-transitory computer readable medium that stores a program sequentially performing: connecting a wireless communication with an I/O device to which an external source is connected; wirelessly receiving contents restored in the external source through the I/O device; in response to determining that the contents are non-compressed, transmitting the contents in their forms to a display apparatus connected to the I/O device by wire; and in response to determining that the contents are compressed, decoding the contents and transmitting the decoded contents to the display apparatus.

The non-transitory computer readable medium is a medium which does not temporarily store data such as a register, a cash, and a memory but semi-permanently stores data and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

At least one of the components, elements, modules or units represented by a block as illustrated in FIGS. 2, 3, 5, and 10 may be embodied as various numbers of hardware, software and/or firmware structures that execute respective functions described above, according to an exemplary embodiment. For example, at least one of these components, elements or units may use a direct circuit structure, such as a memory, processing, logic, a look-up table, etc. that may execute the respective functions through controls of one or more microprocessors or other control apparatuses. Also, at least one of these components, elements or units may be specifically embodied by a module, a program, or a part of code, which contains one or more executable instructions for performing specified logic functions, and executed by one or more microprocessors or other control apparatuses. Also, at least one of these components, elements or units may further include a processor such as a central processing unit (CPU) that performs the respective functions, a microprocessor, or the like. Two or more of these components, elements or units may be combined into one single component, element or unit which performs all operations or functions of the combined two or more components, elements of units. Also, at least part of functions of at least one of these components, elements or units may be performed by another of these components, element or units. Further, although a bus is not illustrated in the above block diagrams, communication between the components, elements or units may be performed through the bus. Functional aspects of the above exemplary embodiments may be implemented in algorithms that execute on one or more processors. Furthermore, the components, elements or units represented by a block or processing steps may employ any number of related art techniques for electronics configuration, signal processing and/or control, data processing and the like

Although a few embodiments have been shown and described, it would be appreciated by those skilled in the art that changes may be made in the exemplary embodiments without departing from the principles and spirit of the disclosure, the scope of which is defined in the claims and their equivalents.

## Claims

1. An input/output (I/O) device comprising:
at least one I/O port configured to be connected to an external source;
a wireless interface configured to communicate with an external apparatus;
an encoder configured to perform encoding; and
a processor configured to, in response to the external source being connected to the at least one I/O port and contents restored in the external source being received through the I/O port, transmit the contents to the external apparatus through the wireless interface,
wherein the processor transmits still images to the external apparatus in response to the contents being the still images, and encodes moving images by using the encoder and transmits the encoded moving images to the external apparatus in response to the contents being the moving images.

2. The I/O device of claim 1, wherein in response to the contents being moving images, the processor controls the encoder to encode the moving images at a lower compression rate than an original compression rate of the moving images.

3. The I/O device of claim 1, wherein in response to the contents being moving images, the processor controls the encoder to encode the moving images at a compression rate varying according to a data size of the moving images and a transmission speed of the wireless interface.

4. The I/O device of claim 1, wherein in response to the contents being still images, the processor transmits the still images to the external apparatus one time or two times.

5. The I/O device of any one of claims 1 through 4, further comprising:
a security processor configured to perform security processing with respect to the contents that are to be transmitted to the external apparatus;
a universal serial bus (USB) port configured to be connected to a USB device; and
a high-definition multimedia interface (HDMI) switch configured to select one HDMI port from the at least one I/O port.

6. The I/O device of any one of claims 1 through 5, further comprising:
a storage unit configured to store the contents,
wherein the processor compares a plurality of frames of the contents stored in the storage unit to determine whether the contents are the still images or the moving images.

7. The I/O device of any one of claims 1 through 5, further comprising:
a storage unit configured to store the contents,
wherein the processor calculates and compares Cyclic Redundancy Check (CRC) values of a plurality of frames of the stored contents, determines that the contents are the still images, in response to the CRC values matching with one another, and determines that the contents are the moving images, in response to the CRC values mismatching with one another.

8. A method of providing contents in an I/O device, the method comprising:
in response to contents being input from an external source connected to an I/O port of the I/O device, determining characteristics of the contents;
in response to the contents being still images, transmitting the still images as they are to an external apparatus through a wireless interface; and
in response to the contents being moving images, encoding the moving images and transmitting the encoded moving images to the external apparatus through the wireless interface.

9. The method of claim 8, wherein the encoding of the moving images is performed at a lower compression rate than an original compression rate of the moving images.

10. The method of claim 8, wherein the encoding of the moving images is performed at a compression rate varying according to a data size of the moving images.

11. The method of claim 8, wherein the still images are transmitted to the external apparatus one time or two times.

12. The method of any one of claims 8 through 11, wherein the determining of the characteristics of the contents comprises:
storing the contents; and
comparing a plurality of frames of the stored contents in unit of at least one pixel to determine whether the contents are the still images or the moving images.

13. The method of any one of claims 8 through 11, wherein the determining of the characteristics of the contents comprises:
storing the contents;
calculating CRC values of a plurality of frames of the stored contents; and
determining that the contents are the still images, in response to the CRC values matching with one another and determining that the contents are the moving images, in response to the CRC values mismatching with one another.

## Amended claims

### Amended claims in accordance with Rule 137(2) EPC.

1. An input/output ,I/O, device (100) comprising:
at least one I/O port (114, 175) configured to be connected to an external source;
a wireless interface (140) configured to communicate with an external apparatus (10);
an encoder (120) configured to perform encoding; and
a processor (130) configured to, in response to the external source being connected to the at least one I/O port and contents restored in the external source being received through the I/O port, transmit the contents to the external apparatus through the wireless interface,
wherein the processor transmits still images to the external apparatus in response to the contents being the still images, and encodes moving images by using the encoder and transmits the encoded moving images to the external apparatus in response to the contents being the moving images;
the I/O device further comprising a storage unit (150) to store the contents;
**characterised in that**:
the processor determines whether the contents in the storage unit is a still image or a moving image by using headier information of each of the contents and/or signaling data that is input along with or separately from the contents.

2. The I/O device (100) of claim 1, wherein in response to the contents being moving images, the processor (130) controls the encoder (120) to encode the moving images at a lower compression rate than an original compression rate of the moving images.

3. The I/O device (100) of claim 1, wherein in response to the contents being moving images, the processor (130) controls the encoder (120) to encode the moving images at a compression rate varying according to a data size of the moving images and a transmission speed of the wireless interface (140).

4. The I/O device (100) of claim 1, wherein in response to the contents being still images, the processor (130) transmits the still images to the external apparatus (10) one time or two times per second.

5. The I/O device (100) of any one of claims 1 through 4, further comprising:
a security processor (160) configured to perform security processing with respect to the contents that are to be transmitted to the external apparatus (10);
a universal serial bus, USB, port (175) configured to be connected to a USB device; and
a high-definition multimedia interface, HDMI, switch (185) configured to select one HDMI port (114) from the at least one I/O port.

6. A method of providing contents in an I/O device (100), the method comprising:
in response to contents being input from an external source (10) connected to an I/O port (114, 175) of the I/O device, determining characteristics of the contents;
in response to the contents being still images, transmitting the still images as they are to an external apparatus through a wireless interface (140); and
in response to the contents being moving images, encoding the moving images and transmitting the encoded moving images to the external apparatus through the wireless interface **characterised by** determining whether the contents in the storage unit is a still image or a moving image by using headier information of each of the contents and/or signaling data that is input along with or separately from the contents.

7. The method of claim 6, wherein the encoding of the moving images is performed at a lower compression rate than an original compression rate of the moving images.

8. The method of claim 6, wherein the encoding of the moving images is performed at a compression rate varying according to a data size of the moving images.

9. The method of claim 6, wherein the still images are transmitted to the external apparatus (10) one time or two times per second.
